# EUROPEAN PATENT APPLICATION

(11) **EP 4 465 020 A1**
(43) Date of publication of application: **20.11.2024**
(21) Application number: 23173715.6
(22) Date of filing: 16.05.2023
(51) Int. Cl.: G01N 21/45, G01N 21/78, G01N 21/77

(54) **SURFACE-MOUNTED METAL-ORGANIC FRAMEWORK-BASED FABRY-PÉROT FILMS FOR DETECTING VOLATILE ORGANIC COMPOUNDS**

(71) Applicant: Karlsruher Institut für Technologie, 76131 Karlsruhe (DE)
(72) Inventor: HEINKE, Lars, 76133 Karlsruhe (DE); ZHAN, Kuo, 76137 Karlsruhe (DE); WÖLL, Christof, 76185 Karlsruhe (DE); HASHEM, Tawheed, 76344 Eggenstein-Leopoldshafen (DE)
(74) Representative: Müller-Boré & Partner Patentanwälte PartG mbB

(57) **Abstract**

The present invention relates to a Fabry-Pérot sensor for verifying the presence of at least one volatile organic compound, the Fabry-Pérot sensor comprising: a reflective substrate (1); a transmissive film (5) made of a metal-organic framework mounted on the surface of the reflective substrate; and a semi-transmissive/-reflective coating (6) disposed on the transmissive film (5), wherein the semi-transmissive/-reflective coating (6) is permeable for the at least one volatile organic compound. The present invention also relates to a system, method, and computer-program product for verifying the presence of at least one volatile organic compound, the system, method, and computer-program product employing the Fabry-Pérot sensor. Further, the present invention relates to the use of the Fabry-Pérot sensor for monitoring food quality of a sample to be analyzed.

## Description

The present invention relates to a Fabry-Pérot sensor as well as to a system, method, and computer-program product for verifying the presence of at least one volatile organic compound. Further, the present invention relates to the use of the Fabry-Pérot sensor for monitoring food quality of a sample to be analyzed.

Volatile organic compounds are low-molecular-weight compounds that have a high vapor pressure at ambient temperature. Herein, a high vapor pressure at ambient temperature is to be understood as a saturation vapor pressure of at least 1 Pa at 25 °C. Amongst others, volatile organic compounds are released as a result of food spoilage. A typical example in this regard are dairy products like milk, where specific microorganisms such as psychrotrophic bacteria, which are contained in milk as an inevitable contaminant, cause an enzymatic degradation of the protein and fat content thereof, leading to the release of volatile organic compounds, see M. Decimo et al., "Volatile organic compounds associated with milk spoilage by psychrotrophic bacteria", International Journal of Dairy Technology 2018, 71(3), 593-600 (DOI: 10.1111/1471-0307.12485). While some of the released volatile organic compounds only have an unpleasant odor, others are dangerous to human health or cause harm to the environment.

By identifying and quantifying volatile organic compounds released from a sample to be analyzed, it is possible to monitor food quality of said sample, taking into account that the nature and the amount of volatile organic compounds are indicative for the extent of food spoilage. For doing so, a variety of approaches have been reported in the art. One approach resides in the use of sensor arrays which are based on gravimetric transducers or conductance changes, see C. K. McGinn et al., "Review of Gravimetric Sensing of Volatile Organic Compounds", ACS Sensors 2020, 5(6), 1514-1534 (DOI: 10.1021/acssensors.0c00333), and R. J. Rath et al., "Chemiresistive Sensor Arrays for Gas/Volatile Organic Compounds Monitoring: A Review", Advanced Engineering Materials 2023, 25(3), 2200830 (DOI: 10.1002/adem.202200830). However, these kinds of sensors require an extensive signal transduction setup. Another approach resides in the use of sensor arrays which utilize dyes and pigments as labels. Since the labels irreversibly interact with the analyte, these kinds of sensors are not suitable for repeated use though.

Accordingly, there exists a need for novel approaches which overcome the drawbacks of those reported in the art for identifying and quantifying volatile organic compounds released from a sample to be analyzed.

In view of the above, the technical problem underlying the present invention is to provide a sensor for verifying the presence of at least one volatile organic compound, wherein the sensor to be provided shall be suitable for repeated use without requiring an extensive signal transduction setup.

The above technical problem has been solved by the subject matter defined in the appended claims.

In a first aspect, the present invention provides a Fabry-Pérot sensor for verifying the presence of at least one volatile organic compound, the Fabry-Pérot sensor comprising:
a reflective substrate;
a transmissive film made of a metal-organic framework mounted on the surface of the reflective substrate acting as a Fabry-Pérot cavity; and
a semi-transmissive/-reflective coating disposed on the transmissive film, wherein the semi-transmissive/-reflective coating is permeable for the at least one volatile organic compound.

The Fabry-Pérot sensor according to the present invention is based on the phenomenon that the refractive index of a metal-organic framework changes when volatile organic compounds, such as methanol, ethanol, acetone, 1-propanol, m-xylene, hexane, and limonene are adsorbed within the pores of the metal-organic framework. When a transmissive film made of the metal-organic framework acts as a Fabry-Pérot cavity, the change of refractive index translates into a color change of the light having interfered with the Fabry-Pérot cavity. Since the change of refractive index depends on the nature and the amount of volatile organic compounds adsorbed within the pores of the metal-organic framework, the same applies to the color change. Hence, said color change can be exploited for identifying and quantifying volatile organic compounds released from a sample to be analyzed.

The Fabry-Pérot sensor according to the present invention is characterized in that a reflective substrate, a transmissive film made of a metal-organic framework, and a semi-transmissive/-reflective coating are arranged in this order.

As far as the substrate is concerned, the present invention is not further limited as long as the substrate is reflective. Herein, the term "reflective" is to be understood such that radiation incident on the substrate is substantially reflected. In other words, for the reflective substrate, transmission and absorption are neglectable compared to reflection.

Throughout the present specification, the term "radiation" means the radiation in the ultraviolet/visible range of the electromagnetic spectrum, e.g., in the wavelength range of from 400 nm to 750 nm. By convention, the terms "radiation" and "light" are used herein interchangeably.

Without being limited thereto, the reflective substrate may be made of silicon. Further, the reflective substrate may be passivated, coated, and/or functionalized. In particular, functionalization of the reflective substrate facilitates mounting of the metal-organic framework on the surface thereof.

Typically, but without limitation, the reflective substrate has a thickness in the range of from 10 µm to 1 mm, as determined by means of optical microscopy. Reflective substrates which are suitable for the purpose of the present invention are commercially available and/or can be prepared by standard procedures known in the art. In principle, any substrate with a flat shape that reflects light can be used herein.

The Fabry-Pérot sensor according to the present invention comprises a transmissive film made of a metal-organic framework mounted on the surface of the reflective substrate. The transmissive film acts as a Fabry-Pérot cavity. In line with the aforementioned definition of the term "reflective", the term "transmissive" is to be understood such that radiation incident on the film is substantially transmitted. In other words, for the transmissive film, reflection and absorption are neglectable compared to transmission.

As known to the skilled person, metal-organic frameworks are a class of compounds consisting of metal ions or clusters that are coordinated to organic ligands, also referred to as organic linkers, to form one-, two-, or three-dimensional structures. Due to its geometric construction, pores are formed within the metal-organic framework, the size of which can *inter alia* be tuned by varying the length of the organic linker. Within these pores, volatile organic compounds as well as other low-molecular-weight compounds can be reversibly adsorbed as guest molecules.

To mount the metal-organic framework on the surface of the reflective substrate for fabricating the transmissive film, layer-by-layer liquid-phase epitaxy has proven to be a reliable process, see L. Heinke et al., "SURMOFs: Liquid-Phase Epitaxy of Metal-Organic Frameworks on Surfaces", in: S. Kaskel, The Chemistry of Metal-Organic Frameworks: Synthesis, Characterization, and Applications, 2016, Volume 1, Chapter 17 (DOI: 10.1002/9783527693078.ch17). In particular, layer-by-layer liquid-phase epitaxy allows the fabrication of films which are particularly thin and homogeneous so that they are transmissive, being a prerequisite for them to act as Fabry-Pérot cavities. In brief, layer-by-layer liquid-phase epitaxy includes the step of immersing the reflective substrate, on the surface of which the metal-organic framework is to be mounted, in a solution containing a salt of the metal, followed by the step of immersing the reflective substrate in a solution containing the organic linker. The aforementioned steps of immersing the reflective substrate in a solution containing a salt of the metal and in a solution containing the organic linker are repeated numerous times to build up the metal-organic framework layer-by-layer on the surface of the reflective substrate. Between these steps, rinsing with the pure solvent is carried out to wash off all unbound species from the reflective substrate.

Typically, but without limitation, the transmissive film made of a metal-organic framework mounted on the surface of the reflective substrate has a thickness in the range of from 100 nm to 1 µm, as determined by means of scanning electron microscopy. The thickness of the transmissive film corresponds to the length of the Fabry-Pérot cavity. Apart from the refractive index of the metal-organic framework, the thickness of the transmissive film dictates the wavelength at which the light having interfered with the Fabry-Pérot cavity shows constructive and destructive interference for a given angle of incidence.

Metal-organic frameworks which are suitable for the purpose of the present invention include but are not limited to ZIF-8, M₂(bdc)₂(dabco) where M is zinc or copper, HKUST-1, and Cu₂(bdc)₂(bipy), where "bdc" means benzene-1,4-dicarboxylic acid, "dabco" means 1,4-diazabicyclo[2.2.2]octane, and "bipy" means 2,2'-bipyridine. As known to the skilled person, HKUST-1 stands for "Hong Kong University of Science and Technology 1" and is a metal-organic framework made up of copper dimers coordinated to the oxygen atoms of benzene-1,3,5-tricarboxylate (btc). ZIF-8 stands for "zeolitic imidazolate framework 8" and is a metal-organic framework made up of zinc ions and imidazolate. The synthesis conditions to be applied during layer-by-layer liquid-phase epitaxy to yield the aforementioned metal-organic frameworks are routinely chosen by a person skilled in the art.

The Fabry-Pérot sensor according to the present invention comprises a semi-transmissive/-reflective coating disposed on the transmissive film. In line with the aforementioned definitions of the terms "reflective" and "transmissive", the term "semi-transmissive/-reflective" is to be understood such that radiation incident on the coating is substantially transmitted and reflected. In other words, for the semi-transmissive/- reflective coating, absorption is neglectable compared to transmission and reflection. Preferably, transmission and reflection occur in similar or equal portions.

Without being limited thereto, the semi-transmissive/-reflective coating may be made of a metal, such as copper, aluminum, platinum, palladium, or gold, in particular a noble metal, such as platinum. To dispose the semi-transmissive/-reflective coating on the transmissive film by means of deposition, sputtering may be applied using a source of the respective metal, for instance. However, any other suitable physical vapor deposition technique may be applied as well, provided that it also results in a semi-transmissive/-reflective coating having a substantially uniform thickness.

The semi-transmissive/-reflective coating is permeable for the at least one volatile organic compound. Thereby, it is ensured that the at least one volatile organic compound which may have been released from a sample to be analyzed can be adsorbed within the pores of the metal-organic framework. To be permeable for the at least one volatile organic compound while at the same time being semi-transmissive/- reflective, the thickness of the semi-transmissive/-reflective coating needs to be appropriately adjusted. This can be done by appropriately setting the duration of sputtering or any other suitable physical vapor deposition technique applied.

Generally, the smaller the thickness of the semi-transmissive/-reflective coating, the more permeable is the semi-transmissive/-reflective coating for the at least one volatile organic compound. Besides, a smaller thickness is preferable as it prevents the semi-transmissive/-reflective coating from significantly affecting the wavelength at which the light having interfered with the Fabry-Pérot cavity shows constructive and destructive interference. On the other hand, when the thickness of the semi-transmissive/- reflective coating is too small, it becomes difficult to control that radiation incident on the semi-transmissive/-reflective coating is substantially transmitted and reflected in equal portions. For these reasons, but without limitation, the semi-transmissive/- reflective coating typically has a thickness in the range of from 2 nm to 30 nm, as determined by the calibration of the deposition apparatus.

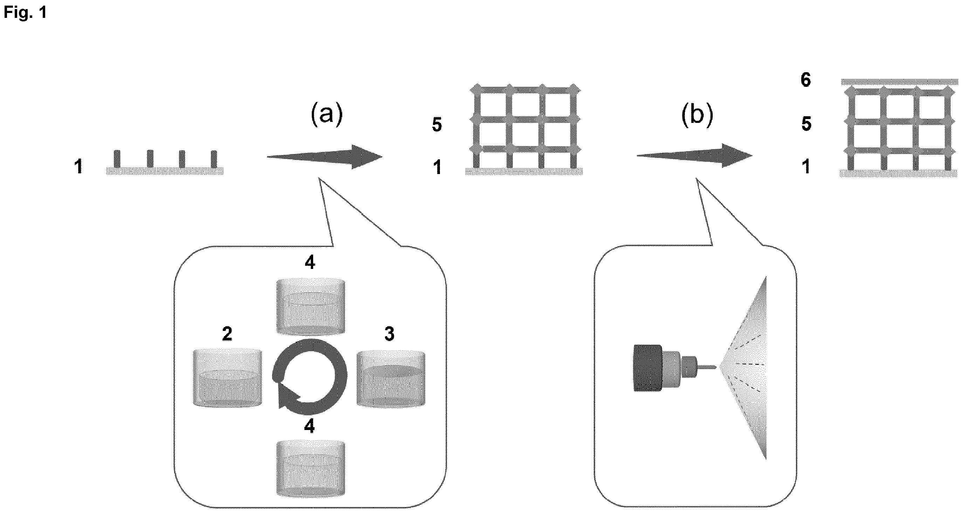

Without being limited thereto, the Fabry-Pérot sensor according to the present invention may be produced as schematically illustrated in Figure 1: (a) By means of a dipping robot, the metal-organic framework is built up layer-by-layer on the surface of the reflective substrate **1** (which may have been functionalized beforehand to facilitate mounting of the metal-organic framework on the surface thereof). For doing so, in this order, the reflective substrate **1** is immersed in a solution containing a salt of the metal **2,** rinsed with the pure solvent **4,** immersed in a solution containing the organic linker **3**, and rinsed with the pure solvent **4.** This cycle is performed *n* times, where *n* represents the number of layers constituting the metal-organic framework. (b) Once the layer-by-layer building-up of the metal-organic framework has been completed, the obtained transmissive film **5** is exposed to sputtering or any other suitable physical vapor deposition technique to dispose the semi-transmissive/-reflective coating **6** thereon.

In a specific embodiment of the present invention, the above-defined Fabry-Pérot sensor is an array comprising a plurality of different transmissive films made of a metal-organic framework mounted on the surface of the reflective substrate, wherein each of the plurality of different transmissive films has the semi-transmissive/-reflective coating disposed thereon. Due to the plurality of different transmissive films, each of which acts as a Fabry-Pérot cavity, it is possible to exploit a plurality of different color changes for identifying and quantifying volatile organic compounds released from a sample to be analyzed. As a result, it is possible to verify the presence of the at least one volatile organic compound with higher accuracy. In particular, the transmissive films may be different in that they are made of different metal-organic frameworks mounted on the surface of the reflective substrate.

In a second aspect, the present invention provides a system for verifying the presence of at least one volatile organic compound, the system comprising:
the Fabry-Pérot sensor according to the present invention as described above;
means for contacting the Fabry-Pérot sensor with a gas stream containing a carrier gas and potentially containing the at least one volatile organic compound;
an irradiation unit configured to irradiate the Fabry-Pérot sensor so that the radiation emitted by the irradiation unit is incident on the semi-transmissive/-reflective coating;
a detection unit configured to detect the radiation having interfered with the Fabry-Pérot cavity; and
a verification unit configured to verify the presence of the at least one volatile organic compound based on the radiation detected by the detection unit.

Wherever applicable, for the system according to the present invention, the same definitions and limitations apply as provided above for the Fabry-Pérot sensor according to the present invention.

The system according to the present invention, which employs the Fabry-Pérot sensor according to the present invention, allows to identify and quantify volatile organic compounds released from a sample to be analyzed. For doing so, the system according to the present invention exploits the color change of the light having interfered with the Fabry-Pérot cavity, further to what has been described above.

The system according to the present invention comprises the Fabry-Pérot sensor according to the present invention as described above. As required, the system may comprise a cuvette which has the Fabry-Pérot sensor placed therein. Typically, if present, the cuvette is made of glass or another transparent material so that light emitted by the irradiation unit can be transmitted therethrough and can reach the semi-transmissive/-reflective coating of the Fabry-Pérot sensor. By placing the Fabry-Pérot sensor inside the cuvette, it is possible to contact the Fabry-Pérot sensor with a gas stream under controlled conditions. However, the present invention also encompasses embodiments where the Fabry-Pérot sensor is not placed in a cuvette.

To contact the Fabry-Pérot sensor with the gas stream, the system according to the present invention comprises suitable means. Without being limited thereto, these means may be a gas supply tubing and a gas discharge tubing. They may be connected to the cuvette if present. Thereby, a gas stream can be provided inside the cuvette. For controlling the gas stream, one or more mass flow controllers may be added to these means. The gas stream contains a carrier gas, e.g., nitrogen, and potentially contains the at least one volatile organic compound which may have been released from the sample to be analyzed.

For irradiating the Fabry-Pérot sensor, the system according to the present invention comprises an irradiation unit which irradiates the Fabry-Pérot sensor so that the radiation emitted by the irradiation unit is incident on the semi-transmissive/-reflective coating. Herein, the angle of incidence is not further limited. In case the angle of incidence is 90°, which means that the angle of reflection is equal to the angle of incidence, the position of the irradiation unit and the position of the detection unit may coincide.

As known to the skilled person, constructive interference takes place when the path difference generated by the Fabry-Pérot cavity is *m* times the wavelength of the light having interfered with the Fabry-Pérot cavity, while destructive interference takes place when the path difference generated by the Fabry-Pérot cavity is (*m*+1/2) times the wavelength of the light having interfered with the Fabry-Pérot cavity, with *m* being a natural number including zero. For a given angle of incidence as well as for a given thickness of the transmissive film, the path difference only depends on the refractive index of the metal-organic framework. In the same way, for a given angle of incidence as well as for a given thickness of the transmissive film, the wavelength at which the light having interfered with the Fabry-Pérot cavity shows constructive and destructive interference only depends on the refractive index of the metal-organic framework. Accordingly, when the refractive index of the metal-organic framework changes due to adsorption of the at least one volatile organic compound within the pores of the metal-organic framework, the wavelength at which the light having interfered with the Fabry-Pérot cavity shows constructive and destructive interference changes as well. That is, the change of refractive index translates into a color change of the light having interfered with the Fabry-Pérot cavity. By exploiting said color change, it is possible to identify and quantify volatile organic compounds released from a sample to be analyzed.

Without being limited thereto, the irradiation unit may be a white light source. Examples of suitable white light sources which may be used herein are white light-emitting diodes (WLEDs), incandescent lamps, e.g., tungsten-halogen lamps, as well as gas discharge lamps, e.g., xenon arc lamps or mercury vapor lamps. For the purpose of the present invention, it is also possible to use supercontinuum lasers which also provide for a very broad optical bandwidth.

For detecting the radiation having interfered with the Fabry-Pérot cavity, the system according to the present invention comprises a detection unit.

Without being limited thereto, the detection unit may be a UV-Vis spectrophotometer. When used in a reflectance measurement, as it is the case according to the present invention, the UV-Vis spectrophotometer measures the intensity / of the light having interfered with the Fabry-Pérot cavity and compares it to the intensity *I*₀ of the light reflected by a reference material, such as a white tile. The ratio *I*/*I*₀ is called reflectance and is usually expressed as a percentage value. In addition to the diffraction grating which separates the light into the different wavelengths, the spectrograph of the UV-Vis spectrophotometer comprises a light-sensitive detector, e.g., a photomultiplier tube, a photodiode or photodiode array, or a charge-coupled device (CCD) or complementary metal-oxide semiconductor (CMOS) sensor.

Alternatively, the detection unit may be a digital camera. Typically, the image sensor of a digital camera is a CCD or CMOS sensor. The digital camera may be part of a portable electronic device, in particular a mobile phone, e.g., a smartphone, or a tablet computer.

For verifying the presence of the at least one volatile organic compound, the system according to the present invention comprises a verification unit which verifies the presence of the at least one volatile organic compound based on the radiation detected by the detection unit.

Typically, the verification unit is a computer that is in communication with the detection unit. Based on the radiation detected by the detection unit, it is decided by the computer whether or not the gas stream contains the at least one volatile organic compound which may have been released from the sample to be analyzed.

In a third aspect, the present invention provides a method for verifying the presence of at least one volatile organic compound, the method comprising the following steps in this order:
providing the Fabry-Pérot sensor according to the present invention as described above;
contacting, by means for contacting, the Fabry-Pérot sensor with a gas stream containing a carrier gas and potentially containing the at least one volatile organic compound;
irradiating, by an irradiation unit, the Fabry-Pérot sensor so that the radiation emitted by the irradiation unit is incident on the semi-transmissive/-reflective coating;
detecting, by a detection unit, the radiation having interfered with the Fabry-Pérot cavity; and
verifying, by a verification unit, the presence of the at least one volatile organic compound based on the radiation detected by the detection unit.

Wherever applicable, for the method according to the present invention, the same definitions and limitations apply as provided above for the Fabry-Pérot sensor according to the present invention as well as for the system according to the present invention.

The method according to the present invention, which employs the Fabry-Pérot sensor according to the present invention, allows to identify and quantify volatile organic compounds released from a sample to be analyzed. For doing so, the method according to the present invention exploits the color change of the light having interfered with the Fabry-Pérot cavity, further to what has been described above.

After providing the Fabry-Pérot sensor, the Fabry-Pérot sensor is contacted with a gas stream containing a carrier gas by means for contacting. As mentioned above, these means may be a gas supply tubing and a gas discharge tubing. For contacting the Fabry-Pérot sensor with the gas stream, the Fabry-Pérot sensor may be placed inside a cuvette which may have the gas supply tubing and the gas discharge tubing connected thereto. The carrier gas streams into the cuvette via the gas supply tubing, contacts the Fabry-Pérot sensor, and streams out of the cuvette via the gas discharge tubing. Apart from the carrier gas, e.g., nitrogen, the gas stream potentially contains the at least one volatile organic compound which may have been released from the sample to be analyzed. For taking up the at least one volatile organic compound, the carrier gas is contacted with the headspace of the sample to be analyzed in advance. For doing so, the carrier gas may stream into a container, e.g., a packaging, which includes said sample and which retains the at least one volatile organic compound if present.

While contacting the Fabry-Pérot sensor, the gas stream containing the carrier gas and potentially containing the at least one volatile organic compound permeates through the semi-transmissive/-reflective coating and enters the pores of the metal-organic framework. Guest molecules which are already adsorbed within the pores of the metal-organic framework are displaced by the carrier gas and the at least one volatile organic compound if present. Depending on the nature and the amount of volatile organic compounds adsorbed within the pores of the metal-organic framework, the refractive index of the metal-organic framework changes.

As required, the Fabry-Pérot sensor may be initially contacted with a gas stream containing the pure carrier gas, e.g., pure nitrogen, to provide for a predetermined gas atmosphere inside the cuvette, for instance, which in turn provides for a predetermined refractive index of the metal-organic framework. The predetermined refractive index may be taken as a reference for evaluating the color change of the light having interfered with the Fabry-Pérot cavity as a result of the change of refractive index of the metal-organic framework, which depends on the nature and the amount of volatile organic compounds adsorbed within the pores of the metal-organic framework.

After the Fabry-Pérot sensor has been contacted with a gas stream containing a carrier gas and potentially containing the at least one volatile organic compound, the Fabry-Pérot sensor is irradiated by an irradiation unit so that the radiation emitted by the irradiation unit is incident on the semi-transmissive/-reflective coating. While a portion of the incident light is reflected by the semi-transmissive/-reflective coating, another portion of the incident light enters the Fabry-Pérot cavity, is reflected by the reflective substrate, and exits the Fabry-Pérot cavity via the semi-transmissive/-reflective coating. The light having thus interfered with the Fabry-Pérot cavity shows constructive and destructive interference due to the path difference generated.

After the Fabry-Pérot sensor has been irradiated, the radiation having interfered with the Fabry-Pérot cavity is detected by a detection unit. Herein, detecting the radiation means that the color change of the light having interfered with the Fabry-Pérot cavity, which results from the change of refractive index of the metal-organic framework, is detected.

After the radiation having interfered with the Fabry-Pérot cavity has been detected, the presence of the at least one volatile organic compound is verified by a verification unit based on the radiation detected by the detection unit. For doing so, the detected color change of the light having interfered with the Fabry-Pérot cavity is evaluated, taking the aforementioned predetermined refractive index of the metal-organic framework as a reference. Evaluation of the detected color change may be achieved by a machine learning method selected from the group consisting of k-nearest neighbors algorithms (*k*-NNs), support vector machines (SVMs), artificial neural networks (ANNs), linear discriminant analysis (LDA), and principal component analysis (PCA), without, however, being limited thereto. Based on the output of such machine learning method, the presence of the at least one volatile organic compound is verified.

Without being limited thereto, the at least one volatile organic compound may be selected from the group consisting of methanol, ethanol, acetone, 1-propanol, *m-*xylene, hexane, and limonene. Each of the aforementioned volatile organic compounds has a saturation vapor pressure of at least 1 Pa at 25 °C. For a specific low-molecular-weight compound, the saturation vapor pressure at a given temperature can be taken from standard textbooks.

In a fourth aspect, the present invention provides a computer-program product for verifying the presence of at least one volatile organic compound, wherein the computer-program product comprises computer-readable instructions, which when loaded and run by a processor of an electronic device, cause the electronic device to carry out the following steps in this order:
irradiating, by an irradiation unit, the Fabry-Pérot sensor according to the present invention as described above so that the radiation emitted by the irradiation unit is incident on the semi-transmissive/-reflective coating;
detecting, by a detection unit, the radiation having interfered with the Fabry-Pérot cavity; and
verifying, by a verification unit, the presence of the at least one volatile organic compound based on the radiation detected by the detection unit.

Wherever applicable, for the computer-program product according to the present invention, the same definitions and limitations apply as provided above for the Fabry-Pérot sensor according to the present invention as well as for the system and method according to the present invention.

The computer-program product according to the present invention, which employs the Fabry-Pérot sensor according to the present invention, allows to identify and quantify volatile organic compounds released from a sample to be analyzed. For doing so, the computer-program product according to the present invention exploits the color change of the light having interfered with the Fabry-Pérot cavity, further to what has been described above.

In addition to carrying out the steps of irradiating, detecting, and verifying, as the very first step, the electronic device may be caused to carry out the step of contacting, by means for contacting, the Fabry-Pérot sensor with a gas stream containing a carrier gas and potentially containing the at least one volatile organic compound. Thereby, it is possible to verify the presence of the at least one volatile organic compound in a fully automated way.

In a fifth aspect, the present invention provides the use of the Fabry-Pérot sensor according to the present invention as described above for monitoring food quality of a sample to be analyzed.

Wherever applicable, for the use according to the present invention, the same definitions and limitations apply as provided above for the Fabry-Pérot sensor according to the present invention as well as for the system, method, and computer-program product according to the present invention.

By using the Fabry-Pérot sensor according to the present invention, e.g., along with the system, method, and computer-program product according to the present invention, it is possible to identify and quantify volatile organic compounds released from a sample to be analyzed. Since the nature and the amount of volatile organic compounds are indicative for the extent of food spoilage, it is possible to monitor food quality of said sample by such identification and quantification. Advantageously, the present invention allows to do so in a convenient manner, since the Fabry-Pérot sensor according to the present invention is suitable for repeated use without requiring an extensive signal transduction setup.

Apart from monitoring food quality of a sample to be analyzed, the Fabry-Pérot sensor according to the present invention may be used in any application where volatile organic compounds are released from a sample to be analyzed. For instance, the Fabry-Pérot sensor according to the present invention is applicable in the field of agriculture, in environmental monitoring, in the identification of counterfeits of perfumes, fragrances and food, as well as in medical diagnosis, without, however, being limited thereto.

### The Figures show

**Figure 1** shows a schematic illustration of producing the Fabry-Pérot sensor according to the present invention.
**Figure 2** shows **(a)** a sketch of ZIF-8 and **(b)** a sketch of Zn₂(bdc)₂(dabco).
**Figure 3** shows **(a)** an X-ray diffractogram of a transmissive film made of ZIF-8 and **(b)** an X-ray diffractogram of a transmissive film made of Zn₂(bdc)₂(dabco).
**Figure 4** shows **(a)** an SEM image of the transmissive film made of ZIF-8 and **(b)** an SEM image of the transmissive film made of Zn₂(bdc)₂(dabco).
**Figure 5** shows **(a)** reflectance spectra of the transmissive film made of ZIF-8 in pure nitrogen as well as in the presence of different volatile organic compounds and **(b)** the wavelength shift of the largest reflectance peak of the transmissive film made of ZIF-8 for varying concentrations of the different volatile organic compounds.
**Figure 6** shows **(a)** the wavelength shift of the largest reflectance peak of the transmissive film made of ZIF-8 in repeated reflectance measurements and **(b)** a plot of the sensitivities of the transmissive films made of ZIF-8 and Zn₂(bdc)₂(dabco) in identifying the different volatile organic compounds.
**Figure 7** shows **(a)** a confusion matrix obtained by support vector machines for pure nitrogen as well as for the different volatile organic compounds and **(b)** a confusion matrix obtained by k-nearest neighbors algorithms for pure nitrogen as well as for the different volatile organic compounds.
**Figure 8** shows **(a)** camera images recorded for a sensor array in pure nitrogen as well as in the presence of the different volatile organic compounds and **(b)** a CIE-colorspace diagram with RGB values extracted from cameras image recorded for the sensor array in pure nitrogen as well as in the presence of the different volatile organic compounds.
**Figure 9** shows **(a)** a confusion matrix obtained by k-nearest neighbors algorithms for pure nitrogen as well as for the different volatile organic compounds and **(b)** consecutive camera images recorded for the sensor array in the presence of methanol as well as in pure nitrogen.
**Figure 10** shows **(a)** photographs of a milk sample stored in a bottle for three days at ambient temperature along with the camera images recorded for the sensor array and **(b)** the accuracy of identifying milk spoilage.

### List of reference signs

- **1**: reflective substrate
- **2**: solution containing a salt of the metal
- **3**: solution containing the organic linker
- **4**: pure solvent
- **5**: transmissive film
- **6**: semi-transmissive/-reflective coating

### Examples

The present invention is further illustrated by the following Examples without, however, being limited thereto.

### Production of Fabry-Pérot sensors

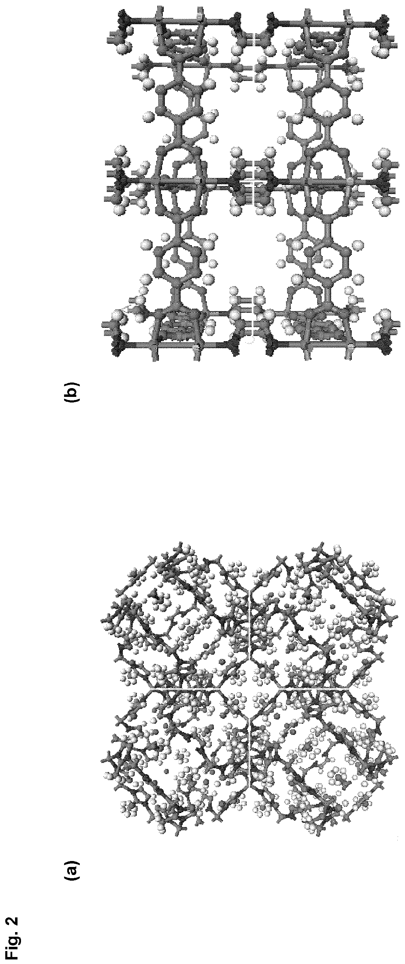

In accordance with the production method shown in **Figure** 1, layer-by-layer liquid-phase epitaxy was applied for fabricating transmissive films made of metal-organic frameworks. Herein, transmissive films made of ZIF-8 and Zn₂(bdc)₂(dabco) mounted on the surface of a reflective substrate were fabricated. Sketches of ZIF-8 and Zn₂(bdc)₂(dabco) are shown in **Figure 2(a)** and **Figure 2(b)****.**

For mounting the metal-organic frameworks, reflective substrates, i.e., silicon with native silicon oxide in case of ZIF-8, and 11-mercapto-1-undecanol-functionalized gold thin film on silicon in case of Zn₂(bdc)₂(dabco), underwent alternative immersion in a solution containing a salt of the metal and in a solution containing the organic linker(s). For immersion with the metal salt, ethanolic solutions containing Zn(NO₃)₂·6H₂O or containing Cu(CH₃COO)₂·H₂O each having a molar concentration of 0.2 mM were used. For immersion with the organic linker(s), ethanolic solutions containing 2-methylimidazole or containing bdc and dabco each having a molar concentration of 0.1 mM were used. Fabrication of the transmissive films was accomplished using a dipping robot to mount 50 layers of the metal-organic framework on the surface of the reflective substrate in each case.

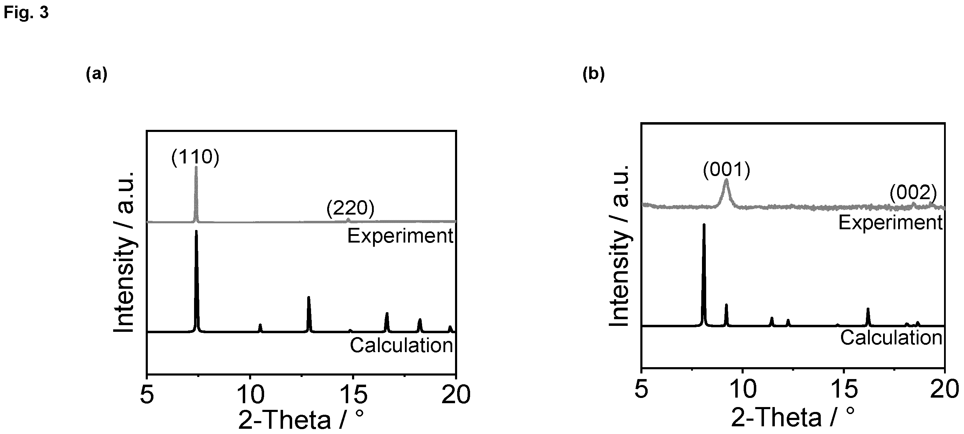

To confirm the crystallinity of the metal-organic frameworks, X-ray diffraction was carried out. X-ray diffractograms of the fabricated transmissive films are shown in **Figure 3(a)** for ZIF-8 and in **Figure 3(b)** for Zn₂(bdc)₂(dabco), taken at a wavelength of 0.154 nm. The experimentally observed diffraction peaks are labelled accordingly. In addition to the experimentally observed diffraction peaks, calculated diffraction peaks are shown in **Figure 3(a)** for ZIF-8 and in **Figure 3(b)** for Zn₂(bdc)₂(dabco) as well, indicating that the desired framework structures were obtained. Besides, the fabricated transmissive films were studied using infrared reflection absorption spectroscopy, which confirmed the chemical composition of the desired framework structures.

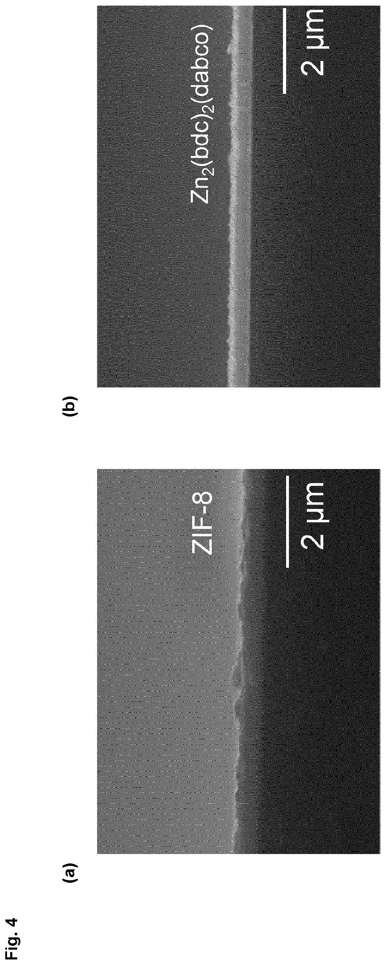

Scanning electron microscopy (SEM) images of the fabricated transmissive films are shown in **Figure 4(a)** for ZIF-8 and in **Figure 4(b)** for Zn₂(bdc)₂(dabco) as corresponding cross-sections. As can be seen from the SEM images, the metal-organic frameworks exhibited a homogeneous morphology with a small surface roughness.

After fabrication of the transmissive films, a semi-transmissive/-reflective coating made of platinum was deposited thereon by means of sputtering using a commercially available apparatus (Sputter Coater MED020). By appropriately setting the duration of sputtering, it was ensured that the semi-transmissive/-reflective coating had a thickness of 2 nm in each case. The thus produced Fabry-Pérot sensors, characterized by a reflective substrate, a transmissive film made of a metal-organic framework, and a semi-transmissive/-reflective coating arranged in this order, could be used for testing as obtained.

### Exposure of Fabry-Pérot sensors to volatile organic compounds

For exposure to volatile organic compounds, the Fabry-Pérot sensors were placed inside a cuvette provided with a gas supply tubing and a gas discharge tubing. Two mass flow controllers allowed to control the gas stream. For the subsequent experiments, the gas stream of the carrier gas, i.e., nitrogen, was divided into two portions: the first one delivered a constant nitrogen flow of 300 mL·min⁻¹ for displacing guest molecules already adsorbed within the pores of the metal-organic framework while the other one passed through a wash bottle containing the volatile organic compound in liquid form to generate a gas stream enriched with the respective volatile organic compound at a vapor pressure slightly smaller than the saturation vapor pressure. All experiments were carried out at ambient temperature.

### Wavelength/intensity variations detected with UV-Vis spectrophotometer

Using six different volatile organic compounds in total (see Table 1 below), the Fabry-Pérot sensors were tested with regard to their capability of identifying volatile organic compounds. For doing so, reflectance measurements were carried out with a UV-Vis spectrophotometer in a controlled environment to detect the wavelength/intensity variations of the largest reflectance peak.

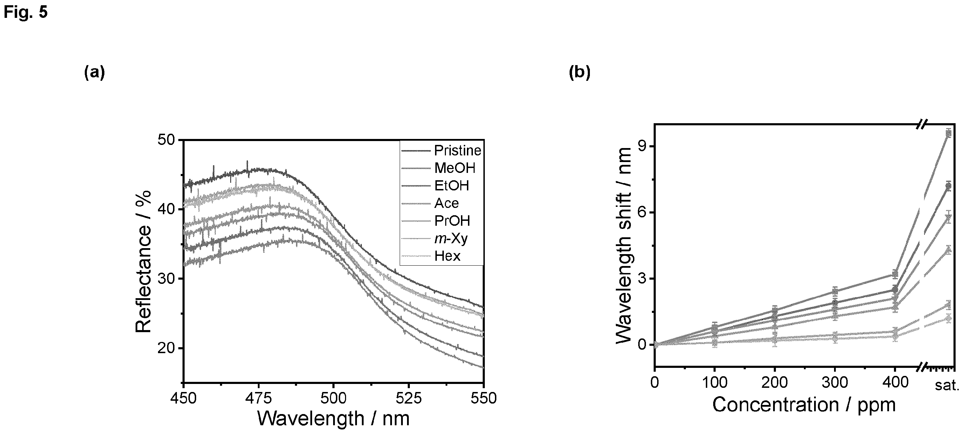

The reflectance spectra of the transmissive film made of ZIF-8 in pure nitrogen (pristine) as well as in the presence of different volatile organic compounds at saturated vapor pressures are shown in **Figure 5(a)****.** The reflectance spectra reveal that pristine ZIF-8 exhibited the largest reflectance peak at around 475.5 nm, with said reflectance peak being shifted to longer wavelengths in case a volatile organic compound was present. The wavelength shift of the largest reflectance peak for varying concentrations of the different volatile organic compounds is shown in **Figure 5(b)****.** As can be recognized, the wavelength shift is linearly proportional to the concentration of the respective volatile organic compounds. Nevertheless, sensitivity as the proportional factor (slope) differed between the respective volatile organic compounds.

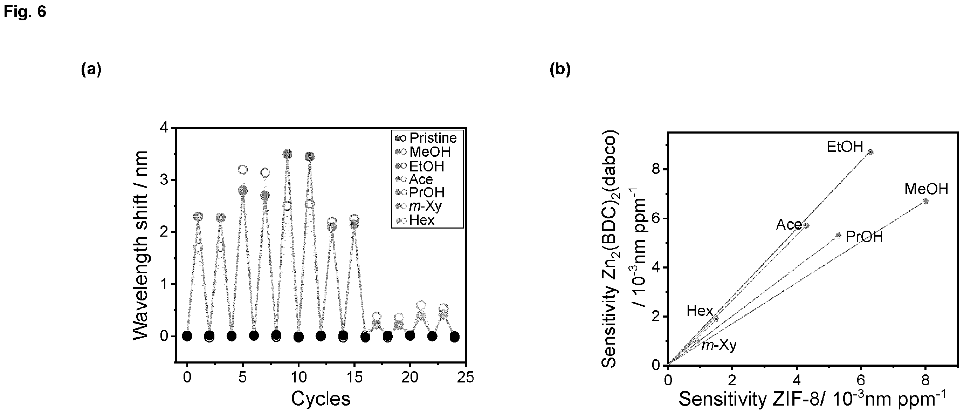

As can be seen from **Figure 6(a)****,** the wavelength shift of the largest reflectance peak of the transmissive film made of ZIF-8 could be reproduced in repeated reflectance measurements. Similar results (not shown) were obtained for the transmissive film made of Zn₂(bdc)₂(dabco).

Limits of detection were determined by dividing three times the standard deviation by the sensitivity. In each case, the standard deviation was calculated based on the variance of the location of the largest reflectance peak in three successive reflectance measurements, yielding standard deviations of 0.016 nm and 0.018 nm for the transmissive films made of ZIF-8 and Zn₂(bdc)₂(dabco), respectively. As shown in Table 1 below, which lists the sensitivity and the limit of detection for the Fabry-Pérot sensors described herein, the limit of detection was well below 100 ppm in each case.

**Table 1**

| | Metal-organic framework | Sensitivity in nm/ppm | Limit of detection in ppm |
|---|---|---|---|
| Acetone (Ace) | ZIF-8 | 4.3×10⁻³ | 11.2 |
| psat = 24 kPa | Zn₂(bdc)₂(dabco) | 5.7×10⁻³ | 9.5 |
| Methanol (MeOH) | ZIF-8 | 8.0×10⁻³ | 6 |
| psat = 16.67 kPa | Zn₂(bdc)₂(dabco) | 6.7×10⁻³ | 8.1 |
| Ethanol (EtOH) | ZIF-8 | 6.3×10⁻³ | 7.6 |
| psat = 7.96 kPa | Zn₂(bdc)₂(dabco) | 8.7×10⁻³ | 6.2 |
| 1-Propanol (PrOH) | ZIF-8 | 5.3×10⁻³ | 9.2 |
| psat = 2.78 kPa | Zn₂(bdc)₂(dabco) | 5.3×10⁻³ | 10.2 |
| m-Xylene (m-Xy) | ZIF-8 | 0.9×10⁻³ | 54.4 |
| psat = 1.33 kPa | Zn₂(bdc)₂(dabco) | 1.0×10⁻³ | 54 |
| Hexane (Hex) | ZIF-8 | 1.5×10⁻³ | 32 |
| psat = 17 kPa | Zn₂(bdc)₂(dabco) | 1.9×10⁻³ | 28.4 |

A plot of the sensitivities in identifying different volatile organic compounds as listed in Table 1 above is shown in **Figure 6(b)****.**

The wavelength/intensity variations of the largest reflectance peak detected with the UV-Vis spectrophotometer were evaluated using a machine learning method to determine the accuracy of the Fabry-Pérot sensors in identifying the six different volatile organic compounds used for testing. Herein, support vector machines or *k-*nearest neighbors algorithms were applied as the machine learning method.

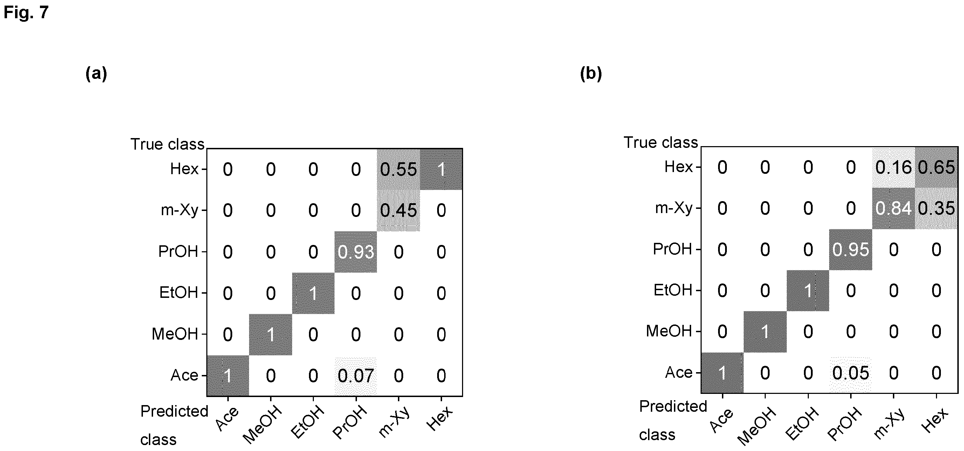

**Figure 7(a)** shows the confusion matrix obtained by support vector machines for pure nitrogen as well as for different volatile organic compounds, and **Figure 7(b)** shows the confusion matrix obtained by k-nearest neighbors algorithms for pure nitrogen as well as for different volatile organic compounds. In each case, the confusion matrix represents the combination of ZIF-8 and Zn₂(bdc)₂(dabco). As can be seen from **Figure 7(a)** and **Figure 7(b)****,** the true classes are the rows, and the predicted classes are the columns. Correct identifications are displayed along the main diagonal of the respective confusion matrix, whereas incorrect identifications are represented by the off-diagonal values. The quantitative identification of the six different volatile organic compounds used for testing at a concentration of 100 ppm by SVMs resulted in an accuracy of 86.67% on average, while the quantitative identification of the six different volatile organic compounds used for testing at a concentration of 100 ppm by k-NNs resulted in a slightly higher accuracy of 90.0% on average. These results confirm that the Fabry-Pérot sensors were capable of identifying the six different volatile organic compounds used for testing. In general, the greater the concentration of the respective volatile organic compound, the higher the accuracy in identifying the same. At saturated vapor pressure, an accuracy of even 100% could be achieved.

### Wavelength/intensity variations detected with digital camera of smartphone

The wavelength/intensity variations of the largest reflectance peak correspond to a color change. To exploit the same for identifying volatile organic compounds, the sensor array was imaged using the digital camera of a conventional smartphone (iPhone XR). As the sensor signal, RGB values (without color balance) were extracted from the camera images, which were then evaluated using a machine learning method to determine the accuracy of the Fabry-Pérot sensors in identifying the six different volatile organic compounds used for testing. Herein, support vector machines or *k-*nearest neighbors algorithms were applied as the machine learning method.

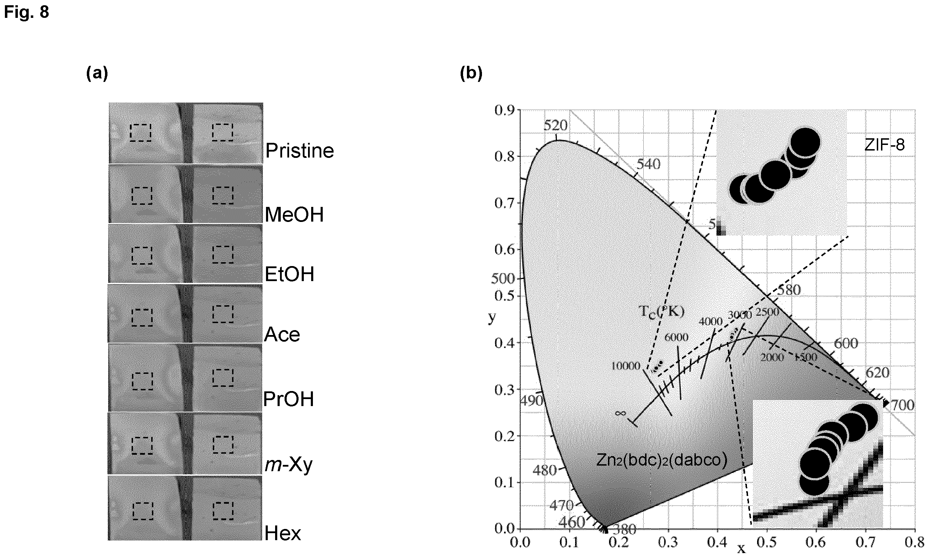

Camera images recorded for the sensor array in pure nitrogen as well as in the presence of different volatile organic compounds are shown in **Figure 8(a)** for the transmissive film made of ZIF-8 (left side) and for the transmissive film made of Zn₂(bdc)₂(dabco) (right side). The dotted rectangles with a size of 2.5 mm × 3 mm represent the area where the RGB values were determined. When depicting the RGB values extracted from the camera images recorded for the sensor array in pure nitrogen as well as in the presence of different volatile organic compounds in a CIE-color-space diagram, as shown in **Figure 8(b)**, it can be seen that the extent of color change depends on the nature and the amount of volatile organic compounds. The insets in **Figure 8(b)** are magnifications to show a change in the RGB values. Accordingly, when exposed to volatile organic compounds, the Fabry-Pérot sensors showed a response that was colorimetric and dependent on the analyte.

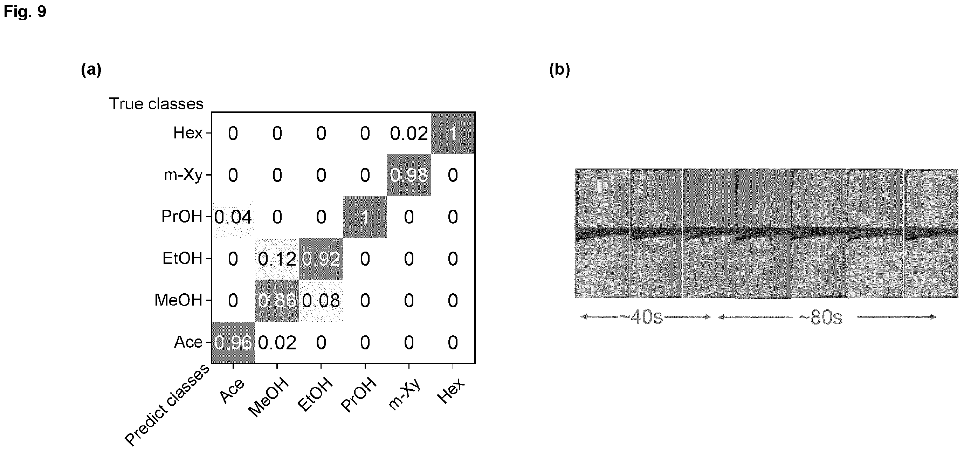

**Figure 9(a)** shows the confusion matrix obtained by *k*-nearest neighbors algorithms for pure nitrogen as well as for different volatile organic compounds. The confusion matrix represents the combination of ZIF-8 and Zn₂(bdc)₂(dabco). As confirmed by the confusion matrix, the six different volatile organic compounds used for testing could be identified based on the analysis of the change in the RGB values. Specifically, the quantitative identification of the six different volatile organic compounds used for testing at saturated vapor pressure by *k*-NNs resulted in an accuracy of 92.6% on average, which was slightly lower than the accuracy achieved with the UV-Vis spectrophotometer (100%) but was still sufficient to identify each of the six different volatile organic compounds used for testing.

### Response and recovery time of Fabry-Pérot sensors

To examine the response and recovery time of the Fabry-Pérot sensors, consecutive camera images were analyzed. **Figure 9(b)** shows consecutive camera images recorded for the sensor array in the presence of methanol (three images labelled with 40 s, left side) as well as in pure nitrogen (four images labelled with 80 s, right side). The time between the consecutive camera images is about 20 s in each case. As can be seen from **Figure 9(b)**, exposure to methanol at saturated vapor pressure for about 40 s already resulted in a steady camera image with consistent RGB values. Eventually, after exposure to pure nitrogen for about 100 s, the RGB values corresponded again to those before exposure to methanol.

### Identification of milk spoilage

Further, by using the Fabry-Pérot sensors along with the digital camera of a conventional smartphone (iPhone XR), it was demonstrated that milk spoilage could be identified, which is typically accompanied by the release of volatile organic compounds. For doing so, the carrier gas was contacted with the headspace of the milk samples to be analyzed. In total, two milk samples were analyzed. The first one was refrigerated (2 °C) for three days while the second one was stored in a bottle at ambient temperature (25 °C) for three days. To evaluate the camera images recorded for the sensor array, *k*-nearest neighbors algorithms were applied as the machine learning method.

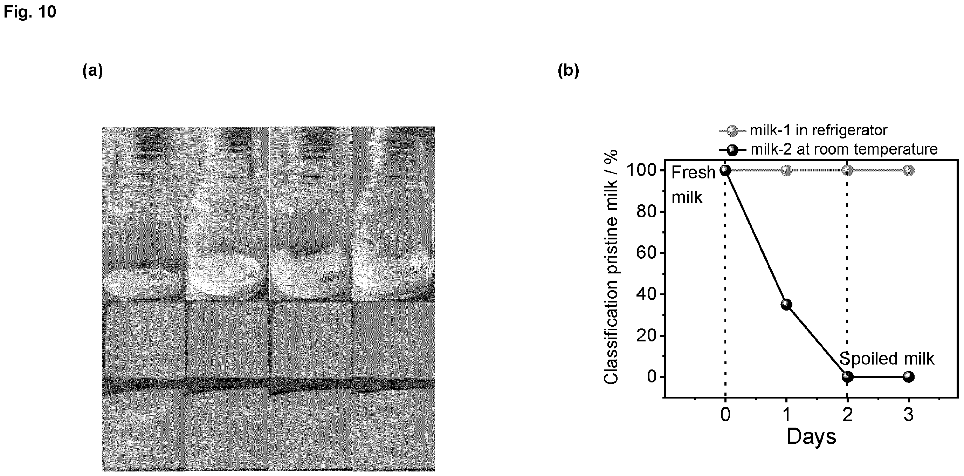

Photographs of the second milk sample stored in a bottle for three days (left to right: 0^{th} day to 3^{rd} day) at ambient temperature are shown in **Figure 10(a)** along with the camera images recorded for the sensor array. In contrast to the first milk sample, the second milk sample led to a color change which could be detected with the digital camera. The color change was consistent with an unpleasant odor that could be experienced as a result of the volatile organic compounds released from the second milk sample. The accuracy of identifying milk spoilage is shown in **Figure 10(b)****.**

### Summary

The Fabry-Pérot sensors described herein showed a favorably low detection limit for volatile organic compounds. In particular, by applying a simple machine learning method to the wavelength/intensity variations of the largest reflectance peak, it was possible to identify each of the six different volatile organic compounds used for testing with high accuracy. For doing so, either a UV-Vis spectrophotometer (laboratory equipment) or the digital camera of a conventional smartphone (non-laboratory equipment) could be used. The Fabry-Pérot sensors described herein have shown to be particularly beneficial in identifying milk spoilage, without, however, being limited thereto.

## Claims

1. A Fabry-Pérot sensor for verifying the presence of at least one volatile organic compound, the Fabry-Pérot sensor comprising:
a reflective substrate;
a transmissive film made of a metal-organic framework mounted on the surface of the reflective substrate acting as a Fabry-Pérot cavity; and
a semi-transmissive/-reflective coating disposed on the transmissive film, wherein the semi-transmissive/-reflective coating is permeable for the at least one volatile organic compound.

2. The Fabry-Pérot sensor according to claim 1, wherein the reflective substrate is made of silicon and is optionally passivated, coated, and/or functionalized.

3. The Fabry-Pérot sensor according to claim 1 or 2, wherein the metal-organic framework is selected from the group consisting of ZIF-8, M₂(bdc)₂(dabco) where M is zinc or copper, HKUST-1, and Cu₂(bdc)₂(bipy).

4. The Fabry-Pérot sensor according to any one of claims 1 to 3, wherein the semi-transmissive/-reflective coating is made of a metal.

5. The Fabry-Pérot sensor according to any one of claims 1 to 4, which is an array comprising a plurality of different transmissive films made of a metal-organic framework mounted on the surface of the reflective substrate, wherein each of the plurality of different transmissive films has the semi-transmissive/-reflective coating disposed thereon.

6. A system for verifying the presence of at least one volatile organic compound, the system comprising:
the Fabry-Pérot sensor according to any one of claims 1 to 5;
means for contacting the Fabry-Pérot sensor with a gas stream containing a carrier gas and potentially containing the at least one volatile organic compound; an irradiation unit configured to irradiate the Fabry-Pérot sensor so that the radiation emitted by the irradiation unit is incident on the semi-transmissive/- reflective coating;
a detection unit configured to detect the radiation having interfered with the Fabry-Pérot cavity; and
a verification unit configured to verify the presence of the at least one volatile organic compound based on the radiation detected by the detection unit.

7. The system according to claim 6, wherein the irradiation unit is a white light source.

8. The system according to claim 6 or 7, wherein the detection unit is a UV-Vis spectrophotometer.

9. The system according to claim 6 or 7, wherein the detection unit is a digital camera.

10. The system according to claim 9, wherein the digital camera is part of a portable electronic device.

11. A method for verifying the presence of at least one volatile organic compound, the method comprising the following steps in this order:
providing the Fabry-Pérot sensor according to any one of claims 1 to 5;
contacting, by means for contacting, the Fabry-Pérot sensor with a gas stream containing a carrier gas and potentially containing the at least one volatile organic compound;
irradiating, by an irradiation unit, the Fabry-Pérot sensor so that the radiation emitted by the irradiation unit is incident on the semi-transmissive/-reflective coating;
detecting, by a detection unit, the radiation having interfered with the Fabry-Pérot cavity; and
verifying, by a verification unit, the presence of the at least one volatile organic compound based on the radiation detected by the detection unit.

12. The method according to claim 11, wherein the presence of the at least one volatile organic compound is verified by means of a machine learning method selected from the group consisting of k-nearest neighbors algorithms (k-NNs), support vector machines (SVMs), artificial neural networks (ANNs), linear discriminant analysis (LDA), and principal component analysis (PCA).

13. The method according to claim 11 or 12, wherein the at least one volatile organic compound is selected from the group consisting of methanol, ethanol, acetone, 1-propanol, *m*-xylene, hexane, and limonene.

14. A computer-program product for verifying the presence of at least one volatile organic compound, wherein the computer-program product comprises computer-readable instructions, which when loaded and run by a processor of an electronic device, cause the electronic device to carry out the following steps in this order:
irradiating, by an irradiation unit, the Fabry-Pérot sensor according to any one of claims 1 to 5 so that the radiation emitted by the irradiation unit is incident on the semi-transmissive/-reflective coating;
detecting, by a detection unit, the radiation having interfered with the Fabry-Pérot cavity; and
verifying, by a verification unit, the presence of the at least one volatile organic compound based on the radiation detected by the detection unit.

15. Use of the Fabry-Pérot sensor according to any one of claims 1 to 5 for monitoring food quality of a sample to be analyzed.
